# EUROPÄISCHE PATENTSCHRIFT

(11) **EP 1 213 091 B1**
(45) Veröffentlichungstag und Bekanntmachung des Hinweises auf die Patenterteilung: **06.10.2004**
(21) Anmeldenummer: 01116188.2
(22) Anmeldetag: 04.07.2001
(51) Int. Cl.: B23Q 7/00, B23D 47/04

(54) **Werkstückhalter für eine Bearbeitungsmaschine und entsprechende Ablängmaschine**
Workpiece holder for machine tool and corresponding cutting installation
Dispositif de fixation pour les pièces pour une machine d'usinage et outil de découpe correspondant

(30) Priorität: 04.07.2000 DE 10031797
(43) Veröffentlichungstag der Anmeldung: 12.06.2002
(73) Patentinhaber: Schumag Aktiengesellschaft, D-52076 Aachen (DE)
(72) Erfinder: Hessberger, Dirk, 52078 Aachen (DE); Walczak, Erich, 52080 Aachen (DE); Grouls, Karlheinz, 52134 Herzogenrath (DE)
(74) Vertreter: Castell, Klaus, Dr.-Ing.

(56) Entgegenhaltungen:
- EP-A- 0 254 028
- FR-A- 2 227 934
- US-A- 2 864 412
- US-A- 4 364 696

## Beschreibung

Die Erfindung betrifft einen Werkstückhalter für eine Bearbeitungsmaschine gemäss dem Oberbegriff des Anspruchs 1.

Werkstückhalter der eingangs genannten Art sind in unterschiedlichster Form, Größe und Ausbildung vorbekannt. Insbesondere sind Werkstückhalter mit aktiven Greifarmen bekannt, die Werkstücke von einer Zuführeinrichtung aufnehmen, während einer Bearbeitung halten und anschließend an eine nachgestaltete Transporteinheit übergeben. Diese Werkstückhalter haben sich in der Praxis zwar überaus bewährt, sind jedoch aufgrund der beweglichen, aktiv zugreifenden Klemmarme aufwendig in Anschaffung und Unterhalt. Zudem stoppen die bekannten Werkzeughalter an der Bearbeitungseinheit, damit das Werkstück bearbeitet werden kann. Dies führt dazu, dass die Durchsatzzahlen mit entsprechenden Werkstückhaltern versehener Bearbeitungsmaschinen begrenzt sind.

Für solche Anwendungsfälle, in denen das Werkstück nicht in seiner Form und Struktur bearbeitet und daher auch nicht in einer genau definierten Position relativ zu einer Bearbeitungseinheit gehalten werden muss, sondern das Werkstück lediglich gereinigt oder befüllt werden muss, sind zudem Transporteinrichtungen z.B. für die Getränkeindustrie bekannt, bei welchen Werkstücke, z.B. Flaschen, an einer Behandlungseinheit, z.B. einer Abfüllmaschine oder einer Reinigungsmaschine kontinuierlich vorbeigeführt werden, wobei in der Regel keine exakte Fixierung von Werkstück und Behandlungseinheit zueinander notwendig ist. Ist eine solche Fixierung notwendig, sind an der Behandlungseinheit selbst Greifer vorgesehen, die das Werkstück erfassen und für die Dauer der Behandlung fixieren. Solche Einrichtungen erlauben zwar sehr hohe Durchsatzzahlen, weisen jedoch sehr aufwendige Mechanismen auf und sind zudem bei Standardbearbeitungsmaschinen, wie insbesondere Fräsen, Sägen oder Fasmaschinen nicht ohne weiteres einsetz- bzw. nachrüstbar.

Beispielsweise ist aus der US-Schrift 2,864,412 ein Werkstückhalter bekannt, der eine Vielzahl an aktiven Greifarmen aufweist. Diese Greifarme sind an einer umlaufenden Kette angeordnet und greifen jeweils ein Werkstück, welches während des Bearbeitens dann mittels eines Greifarmes gehalten wird. Nach der Bearbeitung öffnet sich der jeweilige Greifarm und das zuvor bearbeitete Werkstück wird wieder frei gegeben und von dem Werkstückhalter weg transportiert. Wie bereits eingangs erwähnt sind die aktiv zugreifenden Klemmarme recht aufwendig konstruiert und auf Grund der Vielzahl an bewegten Teilen relativ störanfällig und wartungsintensiv. Hierdurch ist der Unterhalt eines derartigen Werkstückhalters relativ kostenintensiv und dementsprechend auch unwirtschaftlich.

Darüber hinaus ist aus der Druckschrift FR 2,227,934 A ein Werkstückhalter gemäss dem Oberbegriff des Anspruchs 1 bekannt, der zwei parallele umlaufende Ketten aufweist. Hierbei werden die Werkstücke von zwei benachbarten, an den umlaufenden Klemmketten geordneten Klemmbacken geklemmt und einer Bearbeitungseinheit zugeführt. Jedoch können mit den hier benachbarten Klemmbacken, die an den Klemmketten angeordnet sind, nur begrenzte Klemmkräfte auf das Werkstück übertragen werden. Somit ist dieser Werkstückhalter nicht besonders geeignet, Werkstücke während einer Bearbeitung zu halten, bei der relativ große Bearbeitungskräfte auftreten.

Davon ausgehend liegt der Erfindung die Aufgabe zugrunde, einen Werkstückhalter anzugeben, der auch bei einfachen handelsüblichen Bearbeitungsmaschinen, wie insbesondere Ablängmaschinen mit Fräsen, Sägen und dergleichen problemlos eingesetzt und nachgerüstet werden kann und der besonders hohe Durchsatzzahlen ermöglicht.

Die Aufgabe wird gelöst von einem Werkstückhalter gemäss Anspruch 1. Ein solchermaßen ausgebildeter Werkstückhalter ermöglicht es, kontinuierlich mittels der Klemmbacken Werkstücke von einer entsprechenden Zuführeinheit aufzunehmen und an einer Bearbeitungseinheit wie z.B. einer Säge oder einer Fräse vorbeizuführen, und zwar insbesondere ohne während der Bearbeitung anhalten zu müssen. Dabei sei an dieser Stelle betont, dass die geschlossene Kette natürlich auch in Form eines geschlossenen Bandes nach Art eines Förderbandes ausgebildet sein kann. In der einfachsten Ausführungsform genügt es sogar, wenn eine einzige Klemmbacke je Klemmkette vorgesehen ist.

Bei der Klemmbacke kann es sich um eine aktive Klemmbacke mit beweglichen Klemmelementen handeln. Aufgrund ihrer besonderen Einfachheit, Wartungsunempfindlichkeit und kostengünstigen Herstellbarkeit wird jedoch eine passive Klemmbacke bevorzugt, bei der sich die Klemmwirkung allein durch eine entsprechende Führung der Klemmkette z.B. entlang einer gegenüber der offenen Seite der Klemmbacken angeordneten Gleitschiene ergibt.

Die Klemmkette kann auf verschiedene Arten und Weisen geführt und angetrieben werden. Besonders bewährt hat es sich jedoch, wenn der Werkstückhalter Antriebs- und Führungsmittel in Form zweier Walzen zum Antreiben und Führen der Klemmkette entlang einer vordefinierten Bahn umfasst. Ist dabei entlang desjenigen Bereiches der Bahn, in dem eine sichere, feste Einklemmung des zu bearbeitenden Werkstücks benötigt wird, eine quasi als Gegendruckelement wirkende Gleitschiene vorgesehen, genügt es, wenn der Werkstückhalter eine einzige Klemmkette aufweist.

Im bestimmungsgemäßen Betriebszustand des Werkstückhalters laufen die beiden Klemmketten gegensinnig um und entlang eines Abschnittes ihrer jeweiligen Bahn parallel zueinander, so dass sie entlang dieses Abschnittes die sichere Halterung eines zu bearbeitenden Werkstückes ermöglichen. Ein solchermaßen ausgebildeter Werkstückhalter erlaubt nicht nur besonders hohe Durchsatzzahlen, er ermöglicht auch - bei entsprechender Ausbildung der Zuführmittel - ein besonders werkstückschonendes Greifen und Führen der Werkstücke. Die Klemmketten können kontinuierlich umlaufen, so dass der Werkstückhalter nicht ständig abgebremst und wieder beschleunigt werden muss, was sich positiv auf die Haltbarkeit auswirkt.

Bei einer weiteren bevorzugten Ausführungsform der Erfindung können Andruckmittel zum Andrücken der Klemmbacken in Richtung auf ein Werkstück entlang einer Bearbeitungsstrecke vorgesehen sein. Die Andruckmittel können in beliebiger, dem jeweiligen Einsatzzweck optimal angepasster Weise ausgebildet sein. Insbesondere bei Ablängmaschinen hat es sich bewährt, die Andruckmittel in Form einer Andruckschiene auszubilden, wobei die Andruckschiene derart ausgebildet sein kann, dass der von ihr auf die Klemmbacken ausgeübte Druck variabel ist, so dass z.B. Werkstücke mit unterschiedlichen Durchmessern und/oder unterschiedlichen Reibungskoeffizienten sicher von den Klemmbacken gehalten werden können, ohne das Werkstück dabei zu beschädigen.

Soll der von der Andruckschiene auf die Klemmbacken ausgeübte Druck variabel sein, hat es sich besonders bewährt, die Andruckschiene derart auszugestalten, dass sie aus einer Anzahl von Andruckelementen besteht, die mit jeweils eigenen mechanischen, hydraulischen oder pneumatischen Druckmitteln, insbesondere Federn, in Richtung auf die Klemmbacken vorspannbar und/oder beweglich sind. Die Andruckelemente können hierbei überlappend angeordnet sein, so dass über geteilte Stößel mit jeweils eigenen Druckmitteln im Ergebnis ein gleichförmiger Druck aufgebracht werden kann. Durch die Andruckelemente kann vorzugsweise ein variabler Druck je umlaufender Klemmbacke aufgebracht werden, so dass hierdurch ein Einlauf- und ein Auslaufbereich mit niedrigem Anpassdruck und ein Haltebereich mit hohem Anpressdruck gebildet werden kann. Der Anpressdruck kann hierbei je nach Art der Bearbeitung auch zwischendrin nach Bedarf ohne weiteres abhängig vom Ort variiert werden.

Bei einer weiteren bevorzugten Ausführungsform weist jede Klemmbacke wenigstens zwei vorzugsweise unterschiedlich profilierte Klemmtaschen auf. Die Taschen können beispielsweise als Ausnehmungen mit unterschiedlichen Öffnungswinkeln, z.B. 90° und 120°, ausgebildet sein, so dass von einer Klemmbacke sowohl Rund-, Sechskant-, als auch Vierkantprofile ergriffen und eingeklemmt werden können.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung. Es zeigen:
- Fig. 1:: eine Prinzipskizze einer Bearbeitungsmaschine mit einem erfindungsgemäßen Werkstückhalter,
- Fig. 2:: ein Detail aus Figur 1 in vergrößertem Maßstab,
- Fig. 3:: eine schematische Darstellung der Draufsicht auf eine an zwei Bearbeitungseinheiten vorbeigeführte erfindungsgemäße Klemmkette und
- Fig. 4:: eine schematische Draufsicht auf eine an drei Bearbeitungseinheiten vorbeigeführte erfindungsgemäße Klemmkette.

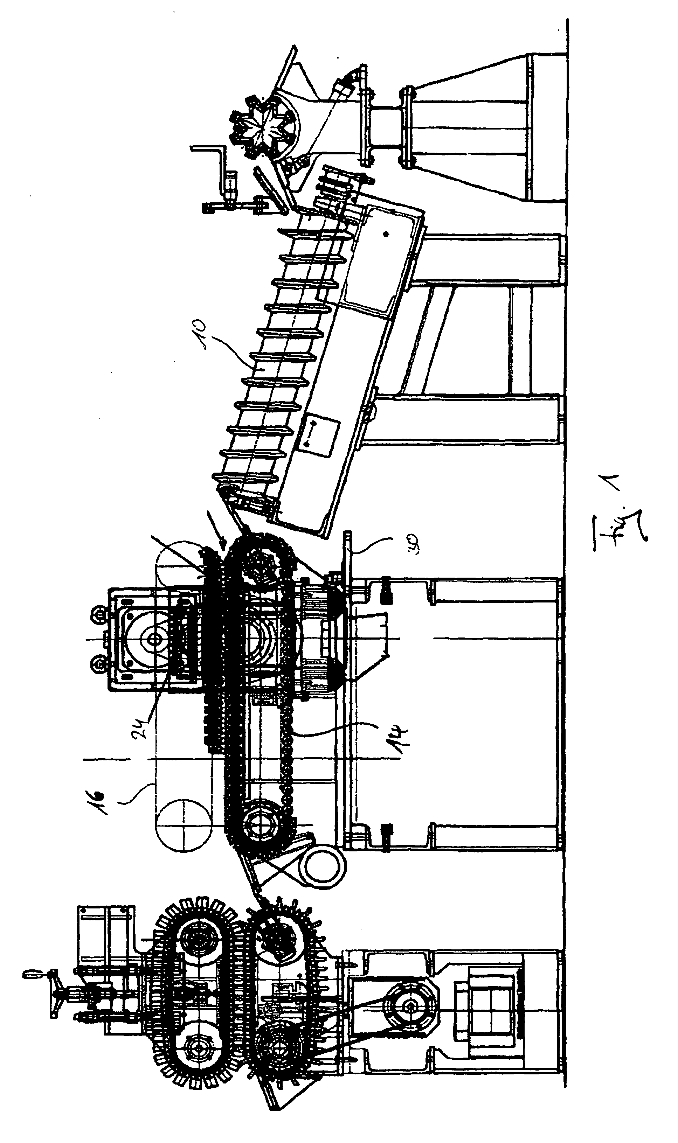

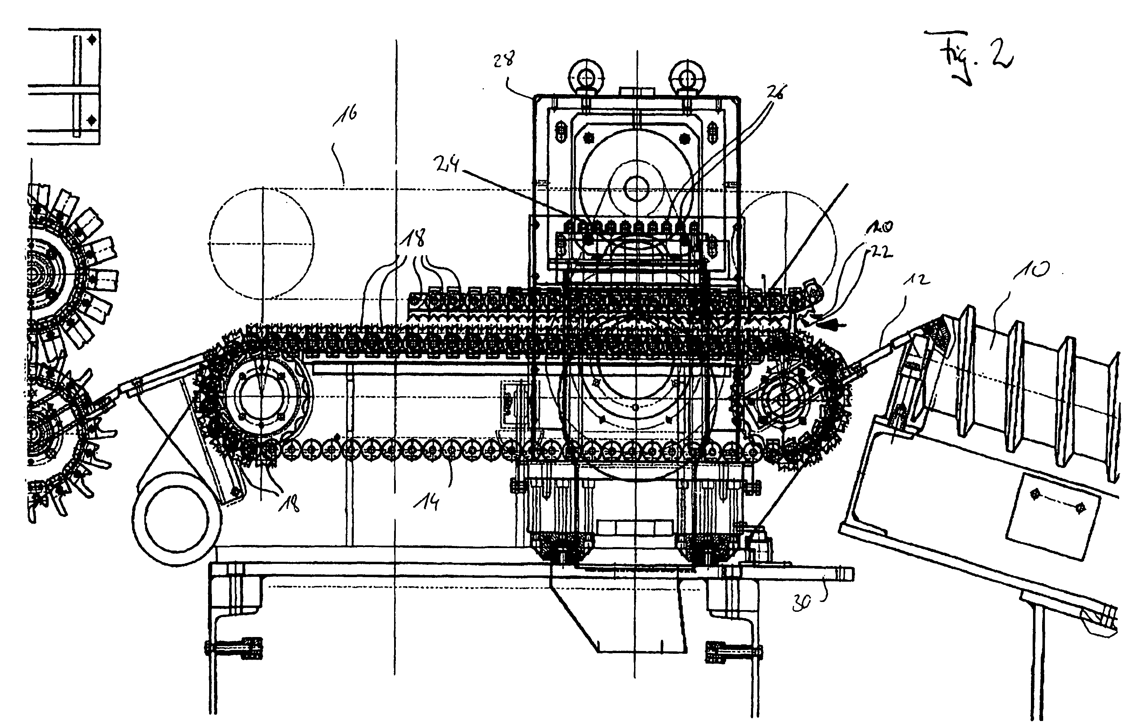

In den Figuren 1 und 2 ist eine Bearbeitungsmaschine gezeigt, bei welcher mittels einer als Werkstückzufuhr dienenden Schnecke 10 zu bearbeitende Werkstücke über eine Rutsche 12 einem Werkstückhalter mit zwei umlaufenden Klemmketten 14 und 16, von denen jeweils nur Teile gezeigt sind, zuführt. Jede Klemmkette 14 und 16 umfasst eine Anzahl von Klemmbacken 18, von denen aus Gründen der Übersichtlichkeit nur einige mit Bezugszeichen versehen wurden. Dabei sind bei diesem Ausführungsbeispiel die beiden Klemmketten 14 und 16 gleich lang ausgebildet, und jeder Klemmbacke der oberen Klemmkette 16 ist eine Klemmbacke der unteren Kette 14 zugeordnet. Es sei an dieser Stelle betont, dass dies nicht zwingend der Fall sein muss - wird nur während einer relativ kurzen Bearbeitungsstrecke eine sichere Klemmung benötigt, reicht es aus, eine der beiden Klemmketten derart auszubilden, dass sie nur während der kurzen Bearbeitungsstrecke wirkt, während die andere der beiden Klemmketten durchaus länger ausgebildet und nach der Bearbeitungsstrecke als reines Transportband, auf dem die bearbeiteten Werkstücke lose aufliegen, dienen kann.

Jede Klemmbacke 18 weist bei diesem Ausführungsbeispiel zwei in Seitenansicht dreieckig profilierte Klemmtaschen 20 und 22 auf, die unterschiedliche Öffnungswinkel besitzen.

Um im Bearbeitungsbereich eine besonders feste Klemmung zu bewirken, ist bei diesem Ausführungsbeispiel eine Andruckschiene 24 vorgesehen, die aus einzelnen, jeweils von Federn 26 belasteten Andruckelementen besteht.

Bei der Bearbeitungseinheit, an der die Werkstücke mittels des Werkstückhalters kontinuierlich vorbeigeführt werden, kann es sich z.B. um eine Fräsmaschine 28 handeln, die auf einer Tragplatte 30 angeordnet ist.

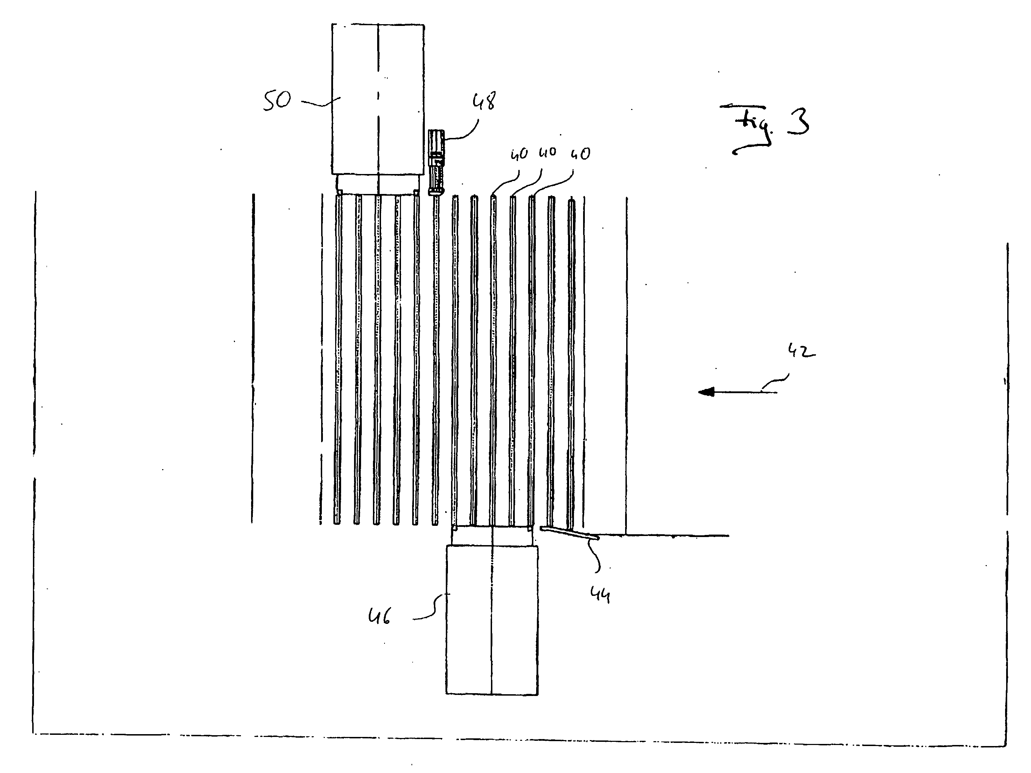

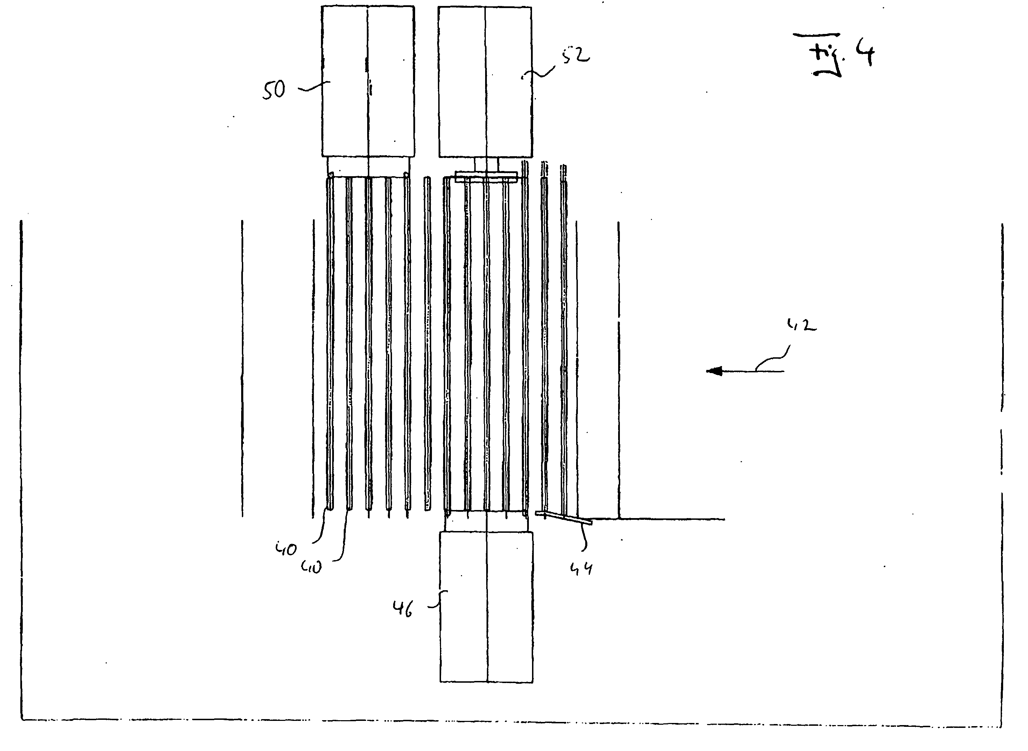

Wie in den Figuren 3 und 4 angedeutet, können mittels eines einzigen Werkstückhalters Werkstücke 40, die dem Werkstückhalter z.B. über die in Figur 2 gezeigte Rutsche 12 in einer Zuführrichtung 42 zugeführt werden, an verschiedenen Bearbeitungseinheiten vorbeigeführt werden. Zweckmäßigerweise ist dazu eine Zentrierhilfe 44 im Bereich des Übergangs der Werkstücke 40 von der Rutsche zu dem Werkstückhalter vorgesehen. Die Werkstücke werden dann von den Klemmbacken des Werkstückhalters gegriffen und an einer ersten Bearbeitungseinheit, z.B. an einer Fräse 46 vorbeigeführt, worauf sie zu einem Positionierer 48 gelangen um schließlich an einer zweiten Fräse 50 vorbeizulaufen, so dass die Werkstücke 40, bei denen es sich im gezeigten Ausführungsbeispiel um langgestreckte rohrartige bzw. stangenartige Werkstücke handelt, an beiden Enden bearbeitet werden.

In der Figur 4 werden die Werkstücke sogar an drei Bearbeitungseinheiten, nämlich den bereits bezeichneten Fräsen 46 und 50 sowie an einer Säge 52 vorbeigeführt.

Im Rahmen des Erfindungsgedankens sind zahlreiche Abwandlungen und Weiterbildungen möglich, die sich z.B. auf die Art und Ausgestaltung der Klemmbacken beziehen. Insbesondere ist es möglich, statt der gezeigten Klemmbacken mit zwei Klemmtaschen auch Klemmbacken mit drei oder mehr Klemmtaschen vorzusehen.

## Patentansprüche

1. Werkstückhalter für eine Bearbeitungsmaschine, bei welcher eine Folge von sich senkrecht zur Förderrichtung (42) ersteckenden Werkstücken (40) einer Bearbeitungseinheit zugeführt und jedes Werkstück während der Bearbeitung von dem Werkstückhalter gehalten wird, wobei der Werkstückhalter wenigstens zwei geschlossene Klemmketten (14, 16) umfasst, auf welche eine Anzahl von Klemmbacken (18) vorgesehen sind, ***dadurch gekennzeichnet, dass*** zwei Klemmketten einander sich gegenseitig ergänzende Klemmbacken aufweisen.

2. Werkstückhalter nach Anspruch 1, ***dadurch gekennzeichnet, dass*** wenigstens ein Werkstück (40) einzeln von den sich gegenseitig ergänzenden Klemmbacken (18) gehalten wird.

3. Werkstückhalter nach Anspruch 1 oder 2, ***dadurch gekennzeichnet, dass*** der Werkstückhalter Antriebs- und Führungsmittel, insbesondere in Form zweier Walzen, zum Antreiben und Führen der Klemmkette entlang einer vordefinierten Bahn umfasst.

4. Werkstückhalter nach einem der Ansprüche 1 bis 3, ***dadurch gekennzeichnet, dass*** Andruckmittel zum Andrücken der Klemmbacken in Richtung auf ein Werkstück entlang einer Bearbeitungsstrecke vorgesehen sind.

5. Werkstückhalter nach Anspruch 4, ***dadurch gekennzeichnet, dass*** die Andruckmittel eine Andruckschiene umfassen.

6. Werkstückhalter nach Anspruch 5, ***dadurch gekennzeichnet, dass*** die Andruckschiene derart ausgebildet ist, dass der von ihr auf die Klemmbacken ausgeübte Druck variabel ist.

7. Werkstückhalter nach Anspruch 6, ***dadurch gekennzeichnet, dass*** die Andruckschiene aus einer Anzahl von Andruckelementen besteht, die mit jeweils eigenen mechanischen, hydraulischen oder pneumatischen Druckmitteln, insbesondere Federn versehen sind.

8. Werkstückhalter nach einem der Ansprüche 1 bis 7, ***dadurch gekennzeichnet, dass*** jede Klemmbacke wenigstens zwei, vorzugsweise unterschiedlich profilierte Klemmtaschen aufweist.

9. Bearbeitungsmaschine, insbesondere Ablängmaschine mit einem Werkstückhalter nach einem der Ansprüche 1 bis 8.

10. Bearbeitungsmaschine nach Anspruch 9 mit wenigstens zwei Bearbeitungseinheiten wie einer Sägeeinheit, einer Fräseinheit oder einer Faseinheit, ***dadurch gekennzeichnet, dass*** der Werkstückhalter derart ausgebildet ist, dass mittels des Werkstückhalters die Werkstücke an zwei Bearbeitungseinheiten vorbeiführbar sind.

11. Bearbeitungsmaschine nach Anspruch 9 oder 10, ***dadurch gekennzeichnet, dass*** zwei einander nachgeschaltete Werkstückhalter vorgesehen sind.

12. Bearbeitungsmaschine nach einem der Ansprüche 9 bis 11, ***dadurch gekennzeichnet, dass*** eine kontinuierlich arbeitende Werkstückzuführeinrichtung, insbesondere eine Förderschnecke, vorgesehen ist.

## Claims

1. A work piece holder for a processing machine, in which a sequence of work pieces (40) of a processing unit extending vertically to the direction of feed (42) is supplied, and each work piece is held during processing by the work piece holder, whereby the work piece holder comprises at least two closed clamping chains (14, 16), auf which a number of clamping jaws is provided, **characterised in that** two clamping chains have mutually supplementary clamping jaws (18).

2. The work piece holder as claimed in Claim 1, **characterised in that** at least one work piece (40) is held singly by the mutually supplementary clamping jaws (18).

3. The work piece holder as claimed in Claim 1 or 2, **characterised in that** the work piece holder comprises drive and guide means, in particular in the form of two rollers, for driving and guiding the clamping chain along a pre-defined path.

4. The work piece holder as claimed in any one of Claims 1 to 3, **characterised in that** contact-pressure means are provided for pressing the clamping jaws in the direction of a work piece along a processing section.

5. The work piece holder as claimed in Claim 4, **characterised in that** the contact-pressure means comprise a contact-pressure rail.

6. The work piece holder as claimed in Claim 5, **characterised in that** the contact-pressure rail is designed such that the pressure exerted by it on the clamping jaws is variable.

7. The work piece holder as claimed in Claim 6, **characterised in that** the contact-pressure rail comprises a number of contact-pressure elements, which in each case are provided with some mechanical, hydraulic or pneumatic pressure means, in particular springs.

8. The work piece holder as claimed in any one of Claims 1 to 7, **characterised in that** each clamping jaw has at least two, preferably variously profiled clamping pockets.

9. A processing machine, in particular a lengthening machine with a work piece holder as claimed in any one of Claims 1 to 8.

10. The processing machine as claimed in Claim 9 with at least two processing units such as a saw unit, a milling unit or a chamfering unit, **characterised in that** the work piece holder is designed such that the work pieces can be passed by two processing units using the work piece holder.

11. The processing machine as claimed in Claim 9 or 10, **characterised in that** two work piece holders are provided positioned successively.

12. The processing machine as claimed in any one of Claims 9 to 11, **characterised in that** a continuously working work piece supply device, in particular a feed screw, is provided.

## Revendications

1. Porte-pièce une machine d'usinage, sur laquelle une succession de pièces (40) s'étendant perpendiculairement au sens de transport (42) est amenée à une unité de traitement et chaque pièce est maintenu pendant l'usinage par le porte-pièce, le porte-pièce comprenant au moins deux chaînes de serrage (14, 16) fermées, sur lesquelles est prévu un grand nombre de mâchoires de serrage (18), **caractérisé en ce que** deux chaînes de serrage présentent des mâchoires de serrage qui se complètent mutuellement.

2. Porte-pièce selon la revendication 1, **caractérisé en ce que** au moins une pièce (40) est maintenue individuellement par des mâchoires de serrage (18) qui se complètent mutuellement.

3. Porte-pièce selon la revendication 1 ou 2, **caractérisé en ce que** le porte-pièce comprend des moyens d'entraînement et de guidage, en particulièrement sous la forme de deux cylindres, pour l'entraînement et le guidage de la chaîne de guidage le long d'une trajectoire prédéfinie.

4. Porte-pièce selon l'une quelconque des revendications 1 à 3, **caractérisé en ce que** des moyens d'appui sont prévus pour l'appui des mâchoires de serrage en direction d'une pièce le long d'un tronçon d'usinage.

5. Porte-pièce selon la revendication 4, **caractérisé en ce que** les moyens d'appui comprennent un rail d'appui.

6. Porte-pièce selon la revendication 5, **caractérisé en ce que** le rail d'appui est conçu de telle sorte que la pression exercée par ce rail sur les mâchoires de serrage est variable.

7. Porte-pièce selon la revendication 6, **caractérisé en ce que** le rail d'appui se compose d'un certain nombre d'éléments d'appui qui sont pourvus chacun de moyens de pression mécaniques, hydrauliques ou pneumatiques propres, en particulier de ressorts.

8. Porte-pièce selon l'une quelconque des revendications 1 à 7 **caractérisé en ce que** chaque mâchoire de serrage présente au moins deux poches de serrage de préférence profilées différemment.

9. Machine d'usinage, en particulier machine de mise à longueur, comprenant un porte-pièce selon l'une quelconque des revendications 1 à 8.

10. Machine d'usinage selon la revendication 9 comprenant au moins deux unités d'usinage comme une unité de sciage, une unité de fraisage ou une unité de chanfrainage, **caractérisée en ce que** le porte-pièce est conçu de telle sorte que les pièces peuvent être guidées au moyen du porte-pièce en passant devant deux unités d'usinage.

11. Machine d'usinage selon la revendication 9 ou 10, **caractérisé en ce que** deux porte-pièce montées l'une derrière l'autre sont prévus.

12. Machine d'usinage selon l'une quelconque des revendications 9 à 11, **caractérisée en ce qu'**un dispositif d'alimentation en pièces travaillant de façon continue, en particulier une vis sans fin, est prévue.
